# EUROPEAN PATENT APPLICATION

(11) **EP 2 937 013 A1**
(43) Date of publication of application: **28.10.2015**
(21) Application number: 14001467.1
(22) Date of filing: 24.04.2014
(51) Int. Cl.: A45D 26/00, F03B 17/06, A46B 13/06

(54) **Water powered epilator**

(71) Applicant: NELA razvojni center d.o.o., Podruznica Lipnica, 4245 Kropa (SI)
(72) Inventor: Valjavec, Andrej, 4294 Krize (SI)
(74) Representative: Macek, Gregor

(57) **Abstract**

The object of the invention is an epilator, in which all power needed for operation is obtained from water by means of a device that converts water flow energy into mechanical and/or electrical power. The epilator can be used in case that the flow rate of the water which runs through the apparatus generates enough power for the apparatus to operate. The water flowing from the epilator has one or several equally or differently oriented water outlets that can be used to prepare the skin for easier epilation, to lift lying hair in the area of the epilating head if the water stream flows in direction towards the hair, wetting of the skin during epilation, skin massage after epilation, rinsing of removed hair during and after epilation.

## Description

### Field of Invention

The object of the invention is an epilator, in which all power needed for operation is obtained from water by means of a device that converts water flow energy into mechanical and/or electric power. The epilator can be used in case that the flow rate of the water which runs through the apparatus generates enough power for the apparatus to operate.

### Description of the Technical Problem

Generally, epilators are devices driven by an electric motor and provided with electronics or other electric circuit, an on/off button and an electricity source which can be batteries or an adequate voltage converter supplied from low-voltage single-phase sockets. The technical problem solved by the present invention is integration of a device that converts the flow-through or pressure energy of water into mechanical and/or electric energy into a device, the major function of which is epilation. In this case the device for converting water energy into mechanical energy replaces the electric motor, the control electronics, the on/off switch and the electricity source.

An advantage brought about by the device of the invention is especially its independence on electricity goods, i. e mains voltage and rechargeable or regular batteries. This apparatus can be used also in places with no electricity. Moreover, no electric motor or batteries are installed in the apparatus, which is a further ecological advantage.

In terms of decomposition after the lifetime is over, a motor driven aparatus leaves quite many hazardous unrecyclable parts behind. A water driven apparatus, after its lifetime is over, leaves considerably less parts behind that cannot be recycled and reused. During the lifetime or use of the apparatus only water is produced as a side product and water is part of the nature and circulates in it.

### Prior Art

An example is US 6,261,301 B1 wherein an electric motor is used to drive the epilating part of the device. A drawback of this solution lies in that electrical voltage is needed for the operation of the apparatus. A voltage source is normally a battery, a storage-battery or an adequate converter of the single-phase mains voltage. Furthermore, a control of such apparatus requires adequate electric conductors, an on/off switch, possibly an electric circuit. Apart from a switch in the interior of the apparatus also a movable (translational or rotary) part on the external part of the apparatus is needed, through which the user controls the switch and consequently switches the apparatus on or off.

Such electrical apparatus needs a considerable number of component parts for its operation which need to be recycled or deposited after the lifetime of the apparatus is over. Some of them are a substantial ecological burden for the environment, especially batteries and storage-batteries.

It is clear from prior art that all epilators require various sources of electrical voltages in order to drive the part of the device intended to remove hair. A drawback of these solutions is especially its dependence on electricity sources which are problematic also from the ecologic point of view.

### Description of a New Solution

Said deficiencies and drawbacks are solved by the epilator of the invention.

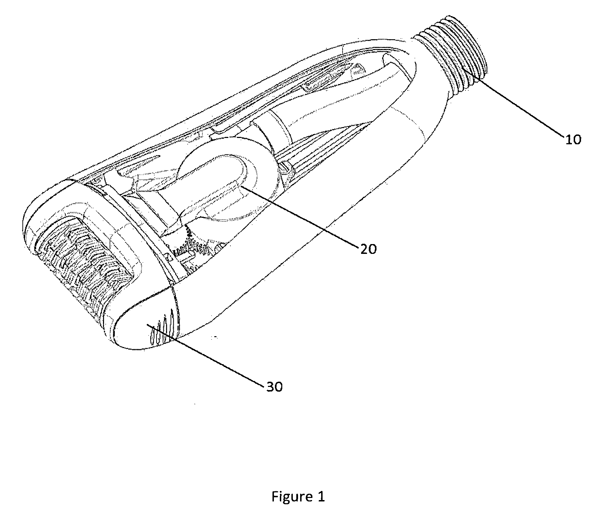

Figure 1 shows an epilator with an embedded device for converting water energy into mechanical energy.

A water driven epilator is provided in the interior of a housing or a part of its external casing with an embedded or integrated device 20 designed to convert water energy into mechanical energy, wherein the installation site predominantly depends on a construction or dimensions of the epilating device. The device 20 for converting energy can be mounted in direct proximity of an epilating head 30 such that a rotary shaft of the device 20 for converting water energy into mechanical energy is coaxial with a shaft of the epilating head 30 or with one or several parts of the epilating head 30; in case of an adjacent or a skew drive shaft or driven shaft an adequate power transmission needs to be installed, either gear wheel, belt transmission or combined transmission, but also a gear with a so-called magnetic power transmission is possible. The advantage of the latter is its silent operation; there is no mechanical contact between elements and no wear. The device 20 for converting water energy into mechanical energy and/or electric energy can have several possible types of constructional solutions: turbines (Francis, Pelton, Kaplan, Tesla....)" piston (axial, radial) or lamella and gear wheel.

Apart from the mechanical energy used for direct or indirect drive of the epilating head 30, the device 20 for converting energy can also generate electric voltage. The construction of the device 20 for converting energy can be embodied in a way that the rotary part, i. e. a subassembly of the device 20 for converting energy, generates electric energy with a built-in permanent magnet or an electric winding or with a combination of both with respect to the stationary part of the device with a built-in permanent magnet, an electric winding or a combination of both. The device can be applied for various functions of the epilator, such as: illumination lamp, electric circuit supply, and also in combination with a user interface or a display or a signal lamp.

The epilator can be connected to a water source by way of a pipe thread 10 on the epilator. The epilator is usually connected to a bathroom hose with a 1/2" thread. Connection can also be done with semi-rigid or rigid hoses, with tubes of various types and diameters, but when a connector of a supply hose does not fit the connector on the epilator, adapter elements need to be used. When the epilator has no water outlet on the body of the epilating device, a special tube needs to be inserted between the inlet tube and the epilator to allow water supply and flow to a desired spot. The water used in this invention can originate from public or private water lines in flats or outside them, from flowing or standing water sources, the pressure of which can be increased by way of pumps or other systems up to an extent that sufficient power is generated at full or partial flow to perform all functions of the epilator.

There are two embodiments of the invention: a first embodiment of the apparatus, in which the water, while the apparatus is operating, flows from the apparatus and is guided through openings of the apparatus into the environment, and a second embodiment, in which the water leaving the apparatus is guided along a tube and exits at an optional space which is normally an outlet duct or another collecting area. In this embodiment, dry or wet epilation is possible, whereas the first embodiment only provides for wet epilation. Moreover, there are other advantages of the first embodiment of the invention: connection to any type of a flexible, semi-rigid or rigid tube is possible by way of a pipe thread 10 on the epilator; the epilator is started and stopped in a way that water flows in the tube for starting the epilator and the water supply is discontinued to stop the epilator; the water flowing from the epilator has one or several equally or differently oriented water outlets that can be used to prepare the skin for easier epilation, to lift lying hair in the area of the epilating head if the water stream flows in direction towards the hair, wetting of the skin during epilation, skin massage after epilation, rinsing of removed hair during and after epilation.

A further advantage of the invention is also the fact that water of various temperatures can be used depending on each user's wish. The water flowing from the epilator can also have a cooling function and reduces a feeling of pain, or a heating function of the skin, which consequently brings about other dermatologically positive effects.

## Claims

1. A water driven epilator **characterized in that** it is provided in the interior of a housing or a part of its external casing with an embedded or integrated device (20) designed to convert water energy into mechanical energy, wherein the installation site of the device (20) is in direct proximity of an epilating head (30) such that a rotary shaft of the device (20) is coaxial with a shaft of the epilating head (30) or with one or several parts of the epilating head (30); in case of an adjacent or a skew drive shaft or driven shaft an adequate power transmission needs to be installed, preferably a gear wheel, and the epilator is connected to a water source by way of a pipe thread (10).

2. Epilator according to claim 1 **characterized in that** the power transmission can be performed by a gear wheel, belt transmission or magnet.

3. Epilator according to preceding claims **characterized in that** the drive of the device (20) is carried out in a way that the pressure and/or flow of the water through the device (20) provide sufficient power for operation.

4. Epilator according to preceding claims **characterized in that** the device (20) can be embodied as a turbine driven, piston driven, lamella driven or gear wheel driven.

5. Epilator according to preceding claims **characterized in that** the device (20) has a rotary part and a stationary part with a built-in permanent magnet or an electric winding or a combination of both for generating electric energy.

6. Epilator according to preceding claims **characterized in that** it has one or several water inlets and one or several water outlets.

7. Use of the epilator according to preceding claims **characterized in that** a stream of water from the epilator rinses epilated hair from the skin, massages the skin after epilation, lifts lying hair in the area of the epilating head, heats or cools the skin during epilation.
